# EUROPEAN PATENT APPLICATION

(11) **EP 2 211 144 A1**
(43) Date of publication of application: **28.07.2010**
(21) Application number: 10150591.5
(22) Date of filing: 12.01.2010
(51) Int. Cl.: G01C 21/00, G01S 13/87, G01S 13/89

(54) **Systems and methods for determining location of an airborne vehicle using radar images**

(30) Priority: 23.01.2009 US 358924
(71) Applicant: Honeywell International Inc., Morristown, NJ 07962 (US)
(72) Inventor: Bunch, Brian P., Morristown, NJ 07962-2245 (US); Nelson, Eric A. Albert, Morristown, NJ 07962-2245 (US)
(74) Representative: Buckley, Guy Julian

(57) **Abstract**

Location systems and methods are operable to determine a location of an airborne vehicle. An exemplary embodiment identifies at least one object in a pre-captured image (202) stored in an onboard memory (116) and defined by a known location, identifies at least one ground object in a current radar image (302), correlates the ground object identified in the current radar image (302) with the object identified in the pre-captured image (202), determines relative location between the installation vehicle and the identified object in the pre-captured image (202), and determines the location of the installation vehicle based upon the known location of the identified object in the pre-captured image (202) and the determined rel ati ve location.

## Description

### BACKGROUND OF THE INVENTION

Airborne vehicles increasingly rely on global positioning system (GPS) devices to determine their current position. For example, an aircraft may use the GPS-based location information to determine if it is travelling on course in accordance with a flight plan. As another example, a missile may use the GPS-based location information to determine its position relative to a target. The GPS-based location information may be used cooperatively with other types of information, such as speed and heading determinable from an inertial measurement unit (IMU) and/or an instrument navigation system (INS) to improve the accuracy and reliability of the airborne vehicle's determined location.

However, the GPS-based location information may not always be available or sufficiently accurate. Intentional error may be induced into the GPS signals such that the accuracy of the GPS-based location information is degraded to some margin of error. Or, in some situations, GPS signals may be encrypted and/or simply terminated to create a GPS signal deprived environment. For example, signals may be interrupted by the military, or interfered with by an enemy.

In such situations, it is desirable to provide alternative ways of accurately determining location of the airborne vehicle. Some prior art systems use the airborne vehicle's on-board radar system to determine information pertaining to geographic features that are in proximity to the airborne vehicle. Such geographic features, such as a building, a mountain, a dam, a bridge, or the like, reflect incident radar signals emitted by the airborne vehicle's radar system. Analysis of the radar returns may be used to determine, for example, relative altitude of a nearby geographic feature. With a-priori knowledge of the airborne vehicle's altitude, the absolute elevation of the geographic feature may be determined. For example, the altitude of a mountain peak may be determinable based upon the radar returns from the mountain peak.

Some types of radar systems are very accurate in determining information from radar returns from geographic features. For example, a precision terrain aided navigation (PTAN) system may be used to very accurately determine the relative location of nearby geographic features. Alternatively, or additionally, a synthetic aperture radar (SAR) processing system may be used.

Location of the airborne vehicle can by determined by correlating the determined altitude of one or more nearby geographic features with geographic information in a map database which describes the nearby geographic features. For example, information corresponding to the location and the altitude of a prominent mountain peak may be saved into the map database. The correlation between the mountain peak and the received radar returns may be used to determine the relative location of the airborne vehicle to the mountain peak. Since the location of the mountain peak is known, the location of the airborne vehicle can then be determined.

Although such systems are very effective in determining the airborne vehicle's location based upon the reflection of radar signals from prominent geographic features, such systems are relatively ineffective when there are no nearby significant geographic features. For example, it may be relatively difficult to determine the location of an aircraft when flying over Kansas, particularly when the nearest mountains are the Colorado Rockies. Accordingly, it is desirable to provide alternative systems and methods of determining location of the airborne vehicle in situations where the GPS signals cannot be used to accurately determine location, or in situations where the GPS signals are not available.

### SUMMARY OF THE INVENTION

Systems and methods of determining a location of an airborne vehicle are disclosed. An exemplary embodiment identifies at least one object in a pre-captured image stored in an onboard memory and defined by a known location, identifies at least one ground object in a current radar image, correlates the ground object identified in the current radar image with the object identified in the pre-captured image, determines relative location between the installation vehicle and the identified object in the pre-captured image, and determines the location of the installation vehicle based upon the known location of the identified object in the pre-captured image and the determined relative location.

In accordance with further aspects, an exemplary embodiment comprises a radar system operable to generate a current radar image based upon radar returns from a ground surface, a memory operable to store at least one pre-captured image, and a processing system. The processing system is operable to identify at least one object in the pre-captured image, the identified object defined by a known location, identify at least one ground object in the current radar image, correlate the ground object identified in the current radar image with the object identified in the pre-captured image, determine a relative location between the installation vehicle and the identified object in the pre-captured image, and determine the location of the installation vehicle based upon the known location of the identified object in the pre-captured image and the determined relative location. Preferably, a plurality of objects identified in the current radar image and the pre-captured image are correlated.

### BRIEF DESCRIPTION OF THE DRAWINGS

Preferred and alternative embodiments are described in detail below with reference to the following drawings:

FIGURE 1 is a block diagram of an exemplary embodiment of an airborne vehicle location system implemented in an aviation electronics system of an airborne vehicle;

FIGURE 2 is a photographic image of an area of interest; and

FIGURE 3 is a radar image of a geographic area in the vicinity of the airborne vehicle.

### DETAILED DESCRIPTION OF THE PREFERRED EMBODIMENT

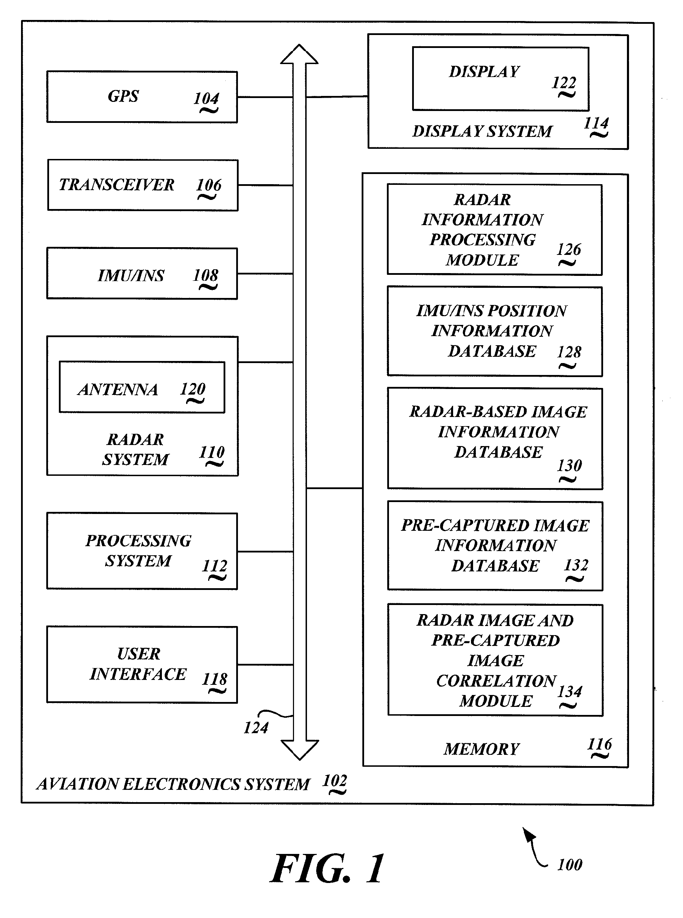

FIGURE 1 is a block diagram of an exemplary embodiment of an airborne vehicle location system 100 implemented in an aviation electronics system 102 of an airborne vehicle. Radar image information is correlated with photographic image information, and based upon the correlation, the relative location of the airborne vehicle with respect to the location of known objects shown in the photographic image is determined. Then, based upon the known location of the airborne vehicle and the location of the known objects, the location of the airborne vehicle is determined.

Correlation herein refers to determining the degree of association between an object identified in the current radar image with a corresponding object identified in a pre-captured image. When the object identified in the current radar image correlates with the corresponding object identified in a pre-captured image, it is understood that the likelihood that the identified objects are the same is very high. Thus, location information associated with the object in the pre-captured image may be used to determine location information for the corresponding and correlated object in the current radar image since radar return information from reflections from the object include range and bearing information between the installation vehicle and the object.

The exemplary aviation electronics system 102 includes an optional global positioning system (GPS) 104, an optional transceiver 106, an inertial measurement unit (IMU) and/or instrument navigation system (INS) 108, a radar system 110, a processing system 112, a display system 114, a memory 116, and an optional crew interface 118. The radar system 110 includes an antenna 120 that is operable to emit radar signals and receive radar returns. The display system 114 includes a display 122. It is appreciated that the aviation electronics system 102 includes many other components and/or systems that are not illustrated or described herein.

The above-described components, in an exemplary embodiment, are communicatively coupled together via a communication bus 124. In alternative embodiments of the aviation electronics system 102, the above-described components may be communicatively coupled to each other in a different manner. For example, one or more of the above-described components may be directly coupled to the processing system 112, or may be coupled to the processing system 112 via intermediary components (not shown).

The radar system 110 may be any suitable radar system, such as, but not limited to, a weather radar system that is operable to detect weather that is located relatively far away from the airborne vehicle. The radar system 110 may be very accurate in determining information from radar returns from geographic features. For example, a precision terrain aided navigation (PTAN) system may be integrated into the radar system 110 to very accurately determine the relative location of nearby geographic features. Alternatively, or additionally, a synthetic aperture radar (SAR) processing system may be used.

The antenna 120 is operable to emit radar pulses and to receive radar returns. A radar return is reflected energy from an object upon which the emitted radar pulse is incident on. The antenna 120 is swept in a back-and-forth motion, in an up and down direction, and/or in other directions of interest, such that the radar system 120 is able to scan an area of interest on the ground in proximity to the airborne vehicle.

An exemplary embodiment of the airborne vehicle location system 100 comprises a plurality of cooperatively acting modules. In an exemplary embodiment, the modules are identified as a radar information processing module 126, an IMU/INS position information database 128, a radar-based image information database 130, a pre-captured image information database 132, and a radar image and pre-captured image correlation module 134. Modules 126, 134 and databases 128, 130, 132 reside in the memory 116, and are retrieved and/or executed by the processing system 112. In other embodiments, the modules and/or databases 126, 128, 130, 132, 134 may be implemented together as a common module and/or database, may be integrated into other modules and/or databases, or reside in other memories (not shown). Further, the data databases 128, 130, 132 may be implemented in various formats, such as a buffer or the like, and/or may be implemented in another memory.

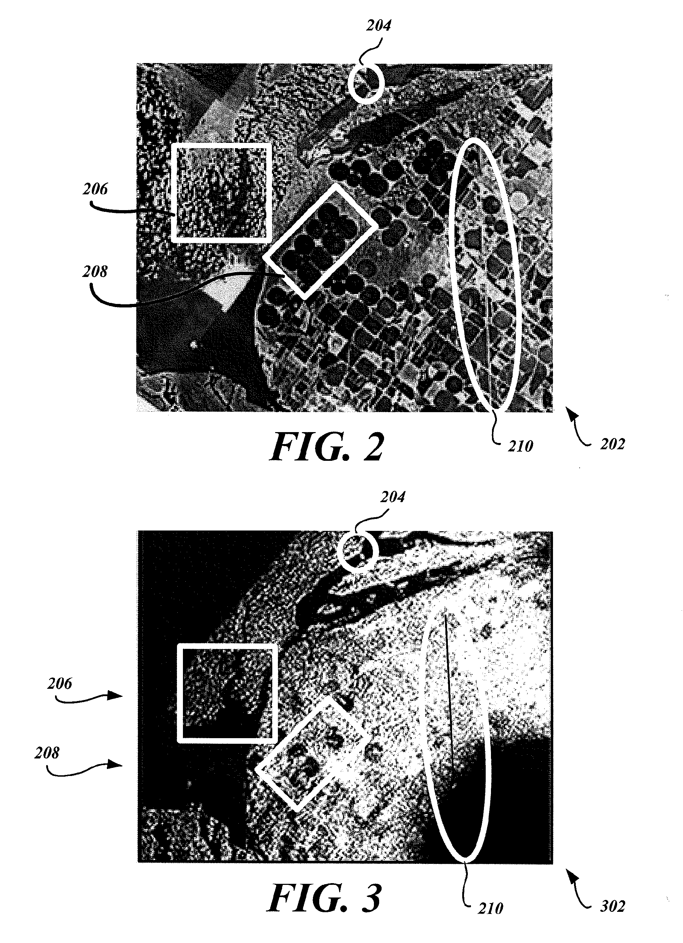

FIGURE 2 is a photographic image 202 of an area of interest. The photographic image 202 includes images of various objects of interest for which a precise geographic location is known. Further, the various objects of interest that are shown in the photographic image 202 are the types of objects that are anticipated to be detectable by the radar system 110.

For example, a dam 204 (highlighted by the white circle to indicate location) is shown in the photographic image 202. Bodies of water above and behind the dam 204 are also discernable in the photographic image 202. Other examples of objects of interest shown in the photographic image 202 include a delta region 206 (highlighted by the white square to indicate location), a plurality of irrigation circles 208 (highlighted by the white rectangle to indicate location), and a power line right of way 210 (highlighted by the white ellipse to indicate location). It is appreciated that the white circle, square, rectangle and ellipse have been superimposed on top of the photographic image 202 to illustrate to the reader of the present application the relative locations of the objects 204, 206, 208, 210 on the photographic image 202.

FIGURE 3 is a radar image 302 of a geographic area in the vicinity of the airborne vehicle. The radar system 110, by directing its antenna 120 towards the ground, generates the radar image 302 that is displayed on the display 122. That is, the radar system has generated image information that is used to generate the displayable radar image 302.

In the radar image 302, the dam 204 (highlighted by the white circle to indicate location), the bodies of water above and behind the dam 204, the delta region 206 (highlighted by the white square to indicate location), the plurality of irrigation circles 208 (highlighted by the white rectangle to indicate location), and a power line 210 (highlighted by the white ellipse to indicate location) are discernable in the radar image 302. (It is appreciated that the white circle, square, rectangle and ellipse have been superimposed on top of the radar image 302 to illustrate to the reader the relative locations of the objects 204, 206, 208, 210 on the radar image 302.)

In the illustrative photographic image 202, it is appreciated that the photographed geographic region is relatively flat, and does not include any prominent geographic objects for which a precise altitude can be determined. Thus, prior art location systems that rely on identification of a prominent object, determination of the prominent object's altitude, and correlation of the radar returns from the prominent object with a mapping database, will not be effective in determining location of the airborne vehicle in this situation.

On the other hand, embodiments of the airborne vehicle location system 100 correlate the image information of one or more pre-captured images of the ground with the image information of the radar image 302. When a correlation is determined between the pre-captured image information and the image information of the radar image 302, the location of the airborne vehicle is determinable.

In an exemplary embodiment, prior to determining the current location of the airborne vehicle, a plurality of photographic images and/or other types of images are captured. Preferably, the pre-captured images of geographic areas correspond to geographic regions that are likely to be traversed by the airborne vehicle. Images may be captured by any suitable image capture device using any suitable image capture means. For example, photographic images may be captured by a satellite. Alternatively, or additionally, photographic images and/or other types of images may be pre-captured by the airborne vehicle, or by another airborne vehicle.

The pre-captured images may be captured using any suitable image format and image capture means. For example, the exemplary photographic image 202 is a traditional photograph captured using visible light. Alternatively, or additionally, the pre-captured images may be captured using other light wavelengths, such as, but not limited to, infrared or ultraviolet light.

Alternatively, or additionally, previously captured radar image information may be used by embodiments of the airborne vehicle location system 100. The pre-captured radar images may be captured by the airborne vehicle itself, or by another airborne vehicle. The pre-captured radar image information is then saved in the pre-captured image information database 132.

As noted above, the pre-captured image information (corresponding to captured photographic images, captured radar images, and/or other types of captured images) is obtained prior to determination of location of the airborne vehicle. This pre-captured image information is stored into the pre-captured image information database 132 using any suitable format.

Various objects in the pre-captured image information are identified. Then, characteristics of the identified objects are determined that uniquely identify the object. For example, the dam 204 has certain characteristics, such as its length, width, and/or outline. Other information may be associated with the object. For example, characteristics of the bodies of water above and below the dam 204 may be determined and associated with the dam 204. These characteristics of an object are used for correlation with information of a current radar image. In some embodiments, the information corresponding to the determined characteristics of the object are predetermined and saved into the pre-captured image information database 132. Alternatively, or additionally, the characteristics may be determined for the object during the correlation process.

For the identified objects in the pre-captured image information, an accurate geographic location is either known or determined. Location may be based upon the latitude and longitude of the object, or may be based upon another suitable reference system. The location of the object is saved into the pre-captured image information database 132. For example, location information for the dam 204 may be available in an archive or other database.

If necessary, location of the object may be determined. Location may be determined using any suitable means. For example, the airborne vehicle, or another airborne vehicle, may fly over or in proximity to the dam 204 and determine the location of the dam 204. Or, a GPS based device may be placed at the dam 204 such that its location is accurately determined. The GPS device might include a radio transmitter such that the location information may be remotely received, such as by the airborne vehicle, or another airborne vehicle, flying over or in proximity to the dam 204.

As the airborne vehicle is traversing a geographic region, its radar system 110 is scanning the ground in proximity to the airborne vehicle. Radar returns are used to generate a current radar image that may be displayed on the display 122. Information corresponding to a selected current radar image is stored into the radar-based image information database 130.

Then, various objects in the current radar image are identified. Then, characteristics of the identified objects in the current radar image which uniquely identify the object are determined. As noted above, the dam 204 has certain characteristics, such as its length, width, and/or outline. Other information may be associated with the object. For example, characteristics of the bodies of water above and below the dam 204 may be determined and associated with the dam 204. These characteristics are used for correlation with information of the pre-captured image information.

Once the objects from the current radar image are identified, the pre-captured image correlation module 134 performs a correlation between the objects identified in the current radar image with image information in the pre-captured image information database 132. Once objects in the current radar image are successfully correlated with objects identifiable from the pre-captured image information database 132, the relative location of the airborne vehicle to those identified objects in the pre-captured image information database 132 is determinable.

Since the location information of one of more of the identified objects in the pre-captured image information database 132 is known, the precise location of the airborne vehicle is then determined. However, it is very likely that the airborne vehicle has moved since capture of the current radar image. That is, the image analysis process that identifies objects in the current radar image and the correlation process requires some amount of time. During the image analysis and correlation processes, the airborne vehicle has likely moved. Accordingly, the location of the airborne vehicle is determined at the time that the current radar image was captured.

During the image analysis and correlation processes, the IMU/INS 108 has sensed movement of the airborne vehicle. For example, heading and speed, and any altitude changes, are determinable from the IMU/INS 108. Information corresponding to the sensed movement of the airborne vehicle is stored in the IMU/INS position information database 128. Thus, the change in location of the airborne vehicle between the current time and the time that the current radar image was captured is determinable.

Embodiments of the airborne vehicle location system 100 retrieve the information from the IMU/INS position information database 128 and determine the amount of and direction of movement of the airborne vehicle between the current time and the time that the current radar image was captured. Accordingly, the current location of the airborne vehicle is determined by combining the change in location information derived from the IMU/INS 108 and the location determined as a result of the image analysis and correlation processes.

In some embodiments, the pre-captured image information is stored into the pre-captured image information database 132, and is then retrieved and processed by the processing system 112. Alternatively, or additionally, the pre-captured image information may be pre-processed into processed image information that is more suitable for the correlation process. The pre-processed image information is then stored into the pre-captured image information database 132. In one embodiment, markers or other suitable object identification information may be pre-determined and saved into the pre-captured image information database 132.

For example, object identification information for the dam 204 (FIGURES 2 and 3) may be determined and saved into the pre-captured image information database 132. When the dam 204 is identified in the current radar image, and is correlated with the information associated with the dam 204 in the pre-captured image information database 132, the location of the dam may then be used to determine the location of the airborne vehicle.

In some embodiments, the pre-captured image information corresponds to a very large geographic region. Thus, the correlation process is computationally complex since a very large amount of pre-captured image information must be correlated with the current radar image.

Alternatively, or additionally, the amount of pre-captured image information that is to be correlated with the current radar image may be reduced based upon a planned flight path and/or a destination of interest. In such embodiments, the pre-captured image information corresponding to geographic regions in proximity to the planned flight path, or a destination region, are retrieved from the pre-captured image information database 132 for correlation. Alternatively, or additionally, only the pre-captured image information corresponding to geographic regions in proximity to the planned flight path, or a destination region, is saved into the pre-captured image information database 132 (thereby reducing the size of the pre-captured image information database 132).

The pre-captured image information may be processed at any suitable location. For example, the pre-captured image information may be processed by the processing system 112 of the airborne vehicle. Alternatively, the pre-captured image information may be processed by another processing system at a remote location. If the pre-captured image information is processed at a remote location, then the pre-captured image information, preferably relevant to the planned flight path of the airborne vehicle, is downloaded into the pre-captured image information database 132. For example, the data may be saved on a portable memory medium, such as a compact disk (DC) or a memory stick, which is taken onto the airborne vehicle prior to departure. Alternatively, or additionally, the pre-captured image information may be transmitted to the transceiver 106 and then downloaded into the pre-captured image information database 132. The pre-captured image information could be transmitted prior to departure, or may be transmitted to the transceiver 106 while the airborne vehicle is travelling over a geographic region of interest.

## Claims

1. A method for determining a location of an airborne vehicle, the method comprising:
identifying at least one object in a pre-captured image (202) stored in a memory (116) onboard the airborne vehicle, the identified object defined by a known location;
identifying at least one ground object in a current radar image (302);
correlating the ground object identified in the current radar image (302) with the object identified in the pre-captured image (202);
determining relative location between the airborne vehicle and the identified object in the pre-captured image (202); and
determining the location of the installation vehicle based upon the known location of the identified object in the pre-captured image (202) and the determined relative location.

2. The method of Claim 1, further comprising:
receiving movement information from at least one of an inertial measurement unit (IMU) and instrument navigation system (INS) (108), the movement information corresponding to movement of the installation vehicle; and
determining movement of the installation vehicle between a time of capture of the current radar image (302) and a current time; and
combining the determined movement of the installation vehicle between the time of capture of the current radar image (302) and the current time with the determined relative location.

3. The method of Claim 2, further comprising:
receiving radar returns from a ground surface;
generating the current radar image (302) from the received radar returns.

4. The method of Claim 1, further comprising:
capturing a plurality of pre-captured images prior to a flight of the installation vehicle; and
storing the plurality of pre-captured images in the memory (116) in the installation vehicle.

5. The method of Claim 1, further comprising:
selecting a plurality of pre-captured images based upon at least one of a destination and a planned flight path of the installation vehicle; and
transmitting the selected plurality of pre-captured images (202) to the installation vehicle while the installation vehicle is in flight.

6. The method of Claim 1, wherein the object identified in the pre-captured image (202) is a first object at a first known location, and further comprising:
identifying a second object in a pre-captured image (202), the identified second object having a second known location; and
correlating a plurality of ground objects identified in the current radar image (302) with the first object and the second object identified in the pre-captured image (202).

7. An airborne vehicle location system comprising:
a radar system (110) operable to generate a current radar image (302) based upon radar returns from a ground surface;
an onboard memory (116) operable to store at least one pre-captured image (202); and
a processing system (112) operable to:
identify at least one object in the pre-captured image (202), the identified object defined by a known location;
identify at least one ground object in the current radar image (302);
correlate the ground object identified in the current radar image (302) with the object identified in the pre-captured image (202);
determine a relative location between the installation vehicle and the identified object in the pre-captured image (202); and
determine the location of the installation vehicle based upon the known location of the identified object in the pre-captured image (202) and the determined relative location.

8. The airborne vehicle location system of Claim 7, further comprising:
at least one of an inertial measurement unit (IMU) and instrument navigation system (INS) (108) operable to generate movement information corresponding to movement of the installation vehicle,
wherein the generated movement information is stored in the memory (116), and wherein the processing system (112) is operable to determine movement of the installation vehicle between the time of capture of the current radar image (302) and a current time, and is operable to combine the determined movement of the installation vehicle between the time of capture of the current radar image (302) and the current time with the determined relative location.

9. The airborne vehicle location system of Claim 7, further comprising:
a transceiver (106) operable to receive the pre-captured image (202) while the installation vehicle is in flight.

10. An airborne vehicle location system, comprising:
means for receiving radar returns (120) of a ground surface;
means for generating (110) a current radar image (302); and
processing means (112) for identifying at least one object in a pre-captured image (202) stored in a memory (116) onboard the airborne vehicle, wherein the identified object is defined by a known location, for identifying at least one ground object in the current radar image (302), for correlating the ground object identified in the current radar image (302) with the object identified in the pre-captured image (202), for determining relative location between the installation vehicle and the identified object in the pre-captured image (202), and for determining the location of the installation vehicle based upon the known location of the identified object in the pre-captured image (202) and the determined relative location.
